# EUROPÄISCHE PATENTANMELDUNG

(11) **EP 0 806 645 A2**
(43) Veröffentlichungstag der Anmeldung: **12.11.1997**
(21) Anmeldenummer: 96120863.4
(22) Anmeldetag: 24.12.1996
(51) Int. Cl.: G01M 1/04

(54) **Spanneinrichtung zum Aufspannen von Rädern von Motorrädern auf die Welle einer Auswuchtmaschine**

(30) Priorität: 07.05.1996 DE 19618301
(71) Anmelder: HAWEKA Auswuchttechnik Horst Warkotsch GmbH, 30938 Burgwedel (DE)
(72) Erfinder: Ohnesorge, Axel, 30938 Burgwedel (DE)
(74) Vertreter: Leine, Sigurd, Dipl.-Ing.

(57) **Zusammenfassung**

Spanneinrichtung zum Aufspannen von Rädern von Motorrädern auf die Welle einer Auswuchtmaschine, mit Mitteln zur zentrischen Halterung der Räder auf der Welle einer Auswuchtmaschine und mit zwei diametral gegenüberliegenden und radial gegen das Rad beweglichen Mitnehmern zur reibschlüssigen Mitnahme des Rades und mit Mitteln zum radialen Andrücken der Mitnehmer an das Rad. Die Mitnehmer weisen Schwenkarme auf, die um Schwenklager verschwenkbar sind, die in gleichem radialen Abstand diametral gegenüberliegend angeordnet sind. An den anderen Enden der Schwenkarme befinden sich in den Bereich des aufzuspannenden Rades ragende Mitnehmerelemente. Diese Spannvorrichtung ist einfach, zuverlässig und einfach und sicher in der Handhabung.

## Beschreibung

Die Erfindung betrifft eine Spanneinrichtung der im Oberbegriff des Anspruchs 1 genannten Art zum Aufspannen von Rädern von Motorrädern auf die Welle einer Auswuchtmaschine.

Durch IT 0 1237574 ist eine Spannvorrichtung der betreffenden Art bekannt, die einen zentralen Wellenstummel zur zentrischen Halterung eines Rades eines Motorrades auf der Welle einer Auswuchtmaschine aufweist. Auf der Welle der Auswuchtmaschine ist ein Topf angebracht, von dem aus sich in diametrale Richtungen zwei flügelartige Schienen erstrecken, auf deren Enden jeweils radial verschieblich Schieber angeordnet sind, von denen aus sich axial in dem Bereich eines aufzuspannenden Rades Mitnehmer erstrecken. Die Schieber sind jeweils über Gelenkstangen mit diametral im gleichen Abstand gegenüberliegenden Schwenklagern an einem doppelarmigen Handhebel verbunden, der um die zentrale Achse der Spanneinrichtung drehbar ist, um so über die Gelenkstangen die Schieber und damit auch die an ihnen befindlichen Mitnehmer von außen gegen das aufzuspannende Rade bewegbar sind. Mit dem Handhebei ist ein Zahnrad verbunden, in das eine federbelastete Klinke eingreift, die mit einem Handhebel lösbar ist. Bei Spannen der Spanneinrichtung durch Drehung des Handhebels rastet die Zahnrad/Klinkenanordnung ein. Zum Lösen muß die Klinke mittels des Handhebels angehoben und somit gelöst werden.

Diese bekannte Spanneinrichtung ist aufwendig in der Konstruktion und umständlich und unsicher in der Handhabung. Beim Spannen muß die Spanneinrichtung festgehalten werden, um den Spannhebel drehen und so durch Aufwendung von Kraft die Mitnehmer fest gegen das Rad zu drücken. Erfolgt dieses Festspannen nicht in ausreichendem Maße, so kann das Rad bei Beschleunigung der Auswuchtmaschine unter den Mitnehmern rutschen. Beim Lösen der Klinke besteht außerdem die Gefahr, daß der doppelarmige Spannheben zurückspringt und somit die Bedienungsperson verletzt. Außerdem ist das Schiebelager der Schieber auf den Schienen störanfällig, da es leicht verschmutzen und damit verklemmen oder verschleißen kann.

Der Erfindung liegt die Aufgabe zugrunde, eine Spanneinrichtung der im Oberbegriff des Anspruchs 1 genannten Art zu schaffen, bei der die Nachteile der bekannten Spanneinrichtung nicht auftreten, die also einfach in der Konstruktion, sicher und zuverlässig in der Handhabung ist und bei der nicht die Gefahr von Verletzungen besteht.

Die der Erfindung zugrundeliegende Aufgabe wird durch die im Kennzeichen des Anspruchs 1 angegebene Lehre gelöst.

Der Grundgedanke der Erfindung besteht darin, statt der bekannten Schieber Schwenkarme vorzusehen, deren Gelenklager nicht verschmutzen und verschleißen können und außerdem einfach und billig herzustellen sind. Ein Spiel in den Schwenklagern oder ein Verschleiß darin kann sich nicht störend auswirken, weil sich beides in bezug auf beide Schwenklager gleich auswirken würde, so daß insgesamt dadurch keine Unwucht entstehen kann. An den Enden der Schwenklager sind in den Bereich des aufzuspannenden Rades ragende Mitnehmerelemente angeordnet, die sich beim Festspannen außen gegen ein aufzuspannendes Rad legen und dieses bei Beschleunigung der Welle der Auswuchtmaschine mitnehmen.

Eine besonders vorteilhafte Weiterbildung dieses Grundgedankens der Erfindung ist im Anspruch 2 angegeben. Nach dieser Weiterbildung bildet der Schwenkarm jeweils den einen Arm eines Doppelhebels, dessen anderer Arm wenigstens teilweise in Umfangsrichtung weist und mit einem Fliehgewicht versehen ist, derart, daß bei Drehung der Spannvorrichtung durch Beschleunigung der Welle der Auswuchtmaschine das Fliehgewicht seinen Arm radial nach außen und den anderen Arm radial nach innen und so das Mitnehmerelement gegen das Rad drückt. Die Kraft zur Anlage des Mitnehmerelements braucht also nicht von Hand aufgebracht zu werden, sondern entsteht automatisch bei Beschleunigung der Welle der Auswuchtmaschine durch die Fliehkräfte des Fliehgewichts. Dabei ist von besonderem Vorteil, daß die Fliehkräfte bei höherer Drehzahl besonders stark zunehmen und damit die Anlagekraft der Mitnehmerelemente und damit die Mitnahme entsprechend stark erhöhen.

Beim Stillsetzen der Auswuchtmaschine verschwinden die Fliehkräfte wieder, so daß die Mitnehmerelemente das Rad wieder freigeben und dieses unmittelbar abgenommen werden kann.

Die Fliehgewichte und die Schwenkarme bzw. die Arme des Doppelhebels müssen natürlich gleiche Masse haben, um so keine Unwucht in die Spannvorrichtung einzubringen.

Dem durch das Fliehgewicht erzeugten Drehmoment wirkt natürlich das durch die Masse des das Mitnehmerelement tragenden Armes und die Masse des Mitnehmers entgegen. Aus diesem Grund sieht eine zweckmäßige Weiterbildung dieser Ausführungsform der Erfindung vor, daß der das Mitnehmerelement aufweisende Arm und/oder das Mitnehmerelement selbst aus leichtem Material, vorzugsweise Aluminium, und/oder aus dünnem profilierten Material besteht.

Gemäß einer zweckmäßigen Weiterbildung der Erfindung steht der Schwenkarm jeweils mit einer Feder in Wirkungsverbindung, die das Mitnehmerelement an das Rad drückt. Zweckmäßigerweise ist dabei die Feder eine Zugfeder, die an dem Schwenkarm angreift. Um die dadurch ständig bewirkte Kraft in Anlagerichtung zum Zwecke des Entspannens aufheben zu können, sind Mittel zum Abheben des Mitnehmerelements von dem Rad vorgesehen. Diese Mittel können z.B. aus einem Exzenter bestehen.

Gemäß einer zweckmäßigen Weiterbildung der Ausführungsform mit dem Doppelhebel gemäß Anspruch 2 greift jeweils an dem anderen, das Fliehgewicht aufweisenden Arm ein vorzugsweise als Gasdruckfeder ausgebildetes Expansionselement an einem solchen Ort und in einer solchen Richtung gelenkig an, daß es die Fliehkraft des Fliehgewichts unterstützt und diesen Arm bei Verschwenken in eine Ruhelage, in der das Mitnehmerelement radial von dem Rad entfernt ist, mit seinem Anlenkpunkt über einen Totpunkt hinweg gegen einen Anschlag drückt. Auf diese Weise befinden sich die Mitnehmerelemente in der Ruhelage in einer festen Schnapplage, so daß sie nicht frei hin- und herschwenken und somit das Aufschieben und Abnehmen eines Rades behindern können. Dies ist besonders vorteilhaft deswegen, weil die Gefahr besteht, daß wenigstens eines der Fliehgewichte auch in Ruhe aufgrund der Schwerkraft eine gewisse Anlage eines Anlageelements bewirken kann, was das Aufstecken und Abziehen eines Rades in besonderem Maß beeinträchtigen würde.

Eine zweckmäßige Weiterbildung dieser Ausführungsform der Erfindung besteht darin, daß das Schwenklager des Schwenkarmes, der Massenmittelpunkt des anderen Armes mit seinem an ihm befestigten Fliehgewicht und der Anlenkpunkt des Expansionselements ein Dreieck bilden, wobei die gedachte Verbindungslinie zwischen dem Schwenklager und der Drehachse der Welle der Auswuchtmaschine durch das Dreieck hindurch verläuft, derart, daß das Fliehgewicht bei Drehung der Spanneinrichtung dem Anlenkpunkt des Expansionselements über den Totpunkt zurückbewegt. In der Ruhelage, in der sich die Welle der Auswuchtmaschine nicht dreht, überwiegt also das durch das Expansionselement entgegen der Anlagerichtung bewirkte Drehmoment so daß irgendwelche Drehmomente aufgrund der Fliekräfte bei Ruhelage nicht größer sein können, so daß Schwenkarm und Anlageelemente die Ruhelage nicht verlassen können. Wird nun die Auswuchtmaschine eingeschaltet und damit die Welle und mit ihr die gesamte Spanneinrichtung in Drehung versetzt, so nimmt die Fliehkraft der Fliehgewichte langsam zu, so daß schnell das durch das Expansionselement in Ruhelage erzeugte gegensinnige Drehmoment aufgehoben und so der Doppelhebel über den Totpunkt hinwegschnappt, wonach das Vorzeichen des durch das Expansionselement bewirkten Drehmoments umkehrt und so dieses Drehmoment zu dem durch die Fliehkraft des Fliehgewichts erzeugten Drehmoments beiträgt. Damit ergibt sich insgesamt eine hohe Anlagekraft und gute Mitnahme des aufzuspannenden Rades.

Die Mitnehmerelemente sind zweckmäßigerweise Stangen, die sich axial von dem Ende jedes Schwenkarmes weg in den Bereich des aufgespannten Rades erstrecken. Eine zweckmäßige Weiterbildung dieser Ausführungsform besteht darin, daß die Stangen an ihren Enden Haken aufweisen, die bei Anlage der Stangen an dem Rad dieses hintergreifen. Dabei ist es weiter zweckmäßig, daß die Haken oder die Stangen axial verstellbar sind, um so eine Anpassung an die axiale Ausdehnung des aufzuspannenden Rades und somit eine Ausrichtung gegen Taumellagen zu bewirken. In diesem Fall sind zweckmäßigerweise drei Mitnehmer vorgesehen. Die axiale Verstellung der Stangen kann einfach mittels einer Stellschraube erfolgen, wobei es natürlich erforderlich ist, eine Drehung der Stangen jeweils durch eine Nut/Zapfenführung zu verhindern.

Eine andere zweckmäßige Weiterbildung der Ausführungsform, bei der die Schwenkarme jeweils als Doppelhebel ausgebildet sind, besteht darin, daß die Arme der doppelarmigen Hebel mittels zweier Gelenkstangen zwangsgekoppelt sind, die parallel und im gleichen abstand zur Drehachse der Welle der Auswuchtmaschine verlaufen. Dadurch ist sichergestellt, daß jeweils beide Hebel die gleiche Drehlage haben und keine Unwuchten auftreten können. Durch die parallele Lage der Gelenkstangen und ihren gleichen Abstand zur Drehachse der Welle der Auswuchtmaschine ist sichergestellt, daß durch sie keine Unwuchten eingeführt werden.

Anhand der Zeichnung soll die Erfindung an einem Ausführungsbeispiel näher erläutert werden.
- Fig. 1: ist eine Axialansicht von der nicht sichtbaren Auswuchtmaschine her auf das Ausführungsbeispiel zusammen mit einem aufgespannten Rad und
- Fig. 2: ist eine Radialansicht in Fig. 1.

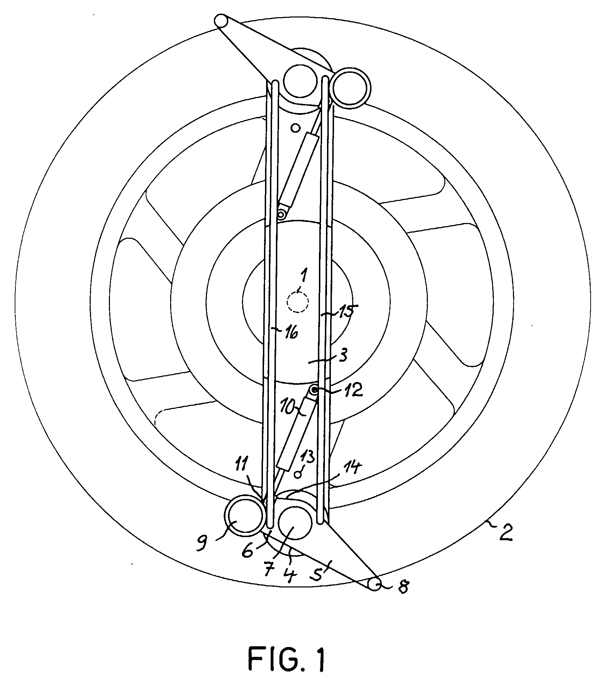

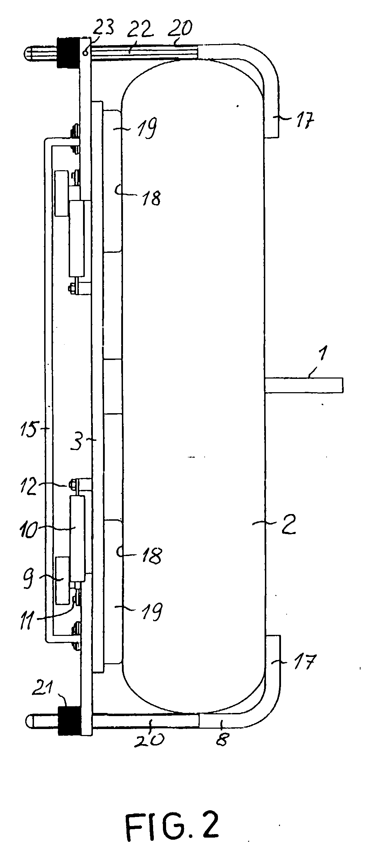

In Fig. 1 ist durch eine gestrichelte Linie ein Aufspannzapfen 1 für ein Rad 2 eines Motorrades angedeutet. Mittel zur Befestigung der dargestellten Spannvorrichtung auf der Welle einer Auswuchtmaschine sind in der Zeichnung nicht sichtbar. Die Vorrichtung weist eine flache, an der Welle einer Auswuchtmaschine zu befestigenden Schiene 3 auf, an deren Enden in gleichem diametralen Abstand jeweils ein Doppelhebel 4, bestehend aus zwei Armen 5 und 6 mittels eines Lagerzapfens 7 verschwenkbar gehalten sind. An dem Ende des Armes 5 befindet sich ein Mitnehmerelement in Form einer Stange 8, wie das nachfolgend anhand der Fig. 2 näher beschrieben ist. Am Ende des Armes 6 befindet sich ein Fliehgewicht 9. Außerdem greift jeweils an dem Arm 6 gelenkig eine Gasdruckfeder 10 an einem Anlenkpunkt 11 an, während das andere Ende der Gasdruckfeder 10 über eine Anlenkpunkt 12 an der Schiene 3 angreift. In der Schiene 3 befinden sich Anschlagzapfen 13, an denen eine Kante 14 des Armes 6 anschlägt, wenn sich die Arme 6 über einen Totpunkt hinweg in Uhrzeigerrichtung in eine Ruhelage bewegt haben.

Die sich diametral gegenüberliegenden Doppelhebel 4, die in der Zeichnung wegen ihrer übereinstimmenden Ausbildung mit gleichen Bezugsziffern versehen sind, sind über Gelenkstangen 15 und 16 derart miteinander zwangsgekoppelt, daß sie sich immer in der gleichen relativen Drehlage befinden.

Fig. 2 zeigt eine Radialansicht in Fig. 1. Die mit gleichen Bezugsziffern versehenen Teile bedürfen keiner ergänzenden Beschreibung. Allerdings ist in Fig. 2 anders als in Fig. 1 zu erkennen, daß die Stangen 8 an ihren Enden Haken 17 aufweisen, die das Rad 2 hintergreifen und so in einer zum Aufspannzapfen 1 senkrechten Ebene halten, die durch Anlageflächen 18 an Anlagestücken 19 bestimmt sind, die sich an der Schiene 3 befinden.

Die Stangen 8 sind teilweise mit Gewinde 20 versehen, das in Stellschrauben 21 eingeschraubt ist. Im Bereich des Gewindes 20 befinden sich Längsnuten 22, in die jeweils ein Führungsstift 23 eingreift, der in die Schiene 3 eingesetzt ist und mit seinem vorderen Ende in die Längsnut 22 eingreift, wie das in Fig. 2 oben zu ersehen ist.

Die beschriebene Spanneinrichtung wird wie folgt verwendet. Bevor ein Rad eines Motorrades auf den Aufspannzapfen 1 aufgeschoben wird, befinden sich die Doppelhebel 4 in einer Ruhelage, in der ihre Kanten 14 an den Anschlagzapfen 13 anliegen. In dieser Ruhelage hat sich jeweils der Gelenkpunkt 11 der Gasdruckfeder 10 über den Totpunkt hinwegbewegt, also über die Verbindungslinie zwischen Lagerzapfen 7 und Drehachse des Aufspannzapfens 1. Die Doppelhebel 4 liegen also in einer stabilen Ruhelage.

In dieser Lage wird jetzt ein Rad 2 auf den Aufspannzapfen 1 aufgeschoben, bis es an den Anlageflächen 18 zur Anlage kommt. Bei diesem Aufschiebevorgang befinden sich die Stangen 8 aufgrund der Ruhelage des Doppelhebels 4 in einer Lage entfernt von dem Außenumfang des Rades 2. Durch diese Drehung wird gleichzeitig bewirkt, was aus den Zeichnungen nicht ersichtlich ist, daß die Haken 17 ebenfalls verschwenkt sind und ungefähr in Umfangsrichtung weisen, so daß sie keine Behinderung beim Aufschieben des Rades 2 darstellen.

Wird die Auswuchtmaschine in Drehung versetzt, so wird auch die dargestellte Spanneinrichtung in Drehung versetzt. Da sich der Massenmittelpunkt der Fliehgewichte 9 (zusammen mit dem der Arme 6) in der Ruhelage nicht über den genannten Totpunkt hinausbewegt haben, erzeugen die Fliehgewichte 9 sofort eine Fliehkraft, so daß, ohne Zutun einer Bedienungsperson, die genannte Ruhelage sofort verlassen wird und die Fliekräfte 9 ein starkes Drehmoment entgegen dem Uhrzeigersinn erzeugen, wodurch die Stangen 8 fest gegen den Außenumfang des Rades 2 gedrückt und dieses dadurch mitgenommen wird. Bei diesem Schwenken in die Arbeitslage werden auch die Haken 17 naturgemäß mitgeschwenkt, so daß sie dann die in Fig. 2 gezeigte Lage einnehmen, in der sie das Rad 2 hintergreifen und an den Anlageflächen 18 in Anlage halten.

Bei Stillsetzen der Auswuchtmaschine verschwindet die Fliehkraft der Fliehgewichte 9, so daß entsprechend die Stangen 8 das Rad 2 freigeben.

## Patentansprüche

1. Spanneinrichtung zum Aufspannen von Rädern von Motorrädern auf die Welle einer Auswuchtmaschine, mit Mitteln zur zentrischen Halterung der Räder auf der Welle einer Auswuchtmaschine und mit zwei diametral gegenüberliegenden und radial gegen das Rad beweglichen Mitnehmern zur reibschlüssigen Mitnahme des Rades und mit Mitteln zum radialen Andrücken der Mitnehmer an das Rad,
**dadurch gekennzeichnet,**
daß die Mitnehmer Schwenkarme aufweisen,
daß die Schwenkarme um Lagerzapfen (7) verschwenkbar sind, die diametral gegenüberliegend in gleichem radialen Abstand angeordnet sind und
daß an den Enden der Schwenkarme in dem Bereich des Rades ragende Mitnehmerelemente angeordnet sind.

2. Spanneinrichtung nach Anspruch 1, **dadurch gekennzeichnet,** daß die Schwenkarme jeweils durch einen Arm (5) eines Doppelhebels (4) gebildet sind, dessen anderer Arm (6) wenigstens teilweise in Umfangsrichtung weist und mit einem Fliehgewicht (9) versehen ist, derart, daß bei Drehung der Spannvorrichtung jeweils das Fliehgewicht (9) seinen Arm (6) radial nach außen und den anderen Arm (5) radial nach innen und so das an ihm befestigte Mitnehmerelement gegen das Rad (2) drückt,

3. Spanneinrichtung nach Anspruch 2, **dadurch gekennzeichnet,** daß der das Mitnehmerelement aufweisende Arm (5) und/oder das Mitnehmerelement aus leichtem Material und/oder aus dünnem, profiliertem Material besteht.

4. Spanneinrichtung nach Anspruch 1, **dadurch gekennzeichnet,** daß der Schwenkarm jeweils mit einer Feder in Wirkungsverbindung steht, die das Mitnehmerelement an das Rad (2) drückt.

5. Spanneinrichtung nach Anspruch 4, **dadurch gekennzeichnet,** daß die Feder eine Zugfeder ist, die an dem das Mitnehmerelement aufweisenden Arm angreift, und daß Mittel zum Abheben des Mitnehmerelements von dem Rad (2) vorgesehen sind.

6. Spanneinrichtung nach Anspruch 2, **dadurch gekennzeichnet,** daß jeweils an dem anderen, das Fliehgewicht (9) aufweisenden Arm (6) ein vorzugsweise als Gasdruckfeder (10) ausgebildetes Expansionselement an einem solchen Ort und in einer solchen Richtung angreifend angelenkt ist, daß es die Fliehkraft des Fliehgewichts unterstützt und diesen Arm bei Verschwenken in eine Ruhelage, in der das Mitnehmerelement radial von dem Rad (2) entfernt ist, mit seinem Anlenkpunkt (11) über einen Totpunkt hinweg gegen einen Anschlag (13) drückt.

7. Spanneinrichtung nach Anspruch 6, **dadurch gekennzeichnet,** daß das Schwenklager des Doppelhebels (4), der Massenmittelpunkt des anderen Armes mit seinem an ihm befestigten Fliehgewicht (9) und der Anlenkpunkt (11) des Expansionselements ein Dreieck bilden, wobei die gedachte Verbindungslinie zwischen dem Schwenklager und der Drehachse des Aufspannzapfens (1) durch das Dreieck hindurchverläuft, derart, daß das Fliehgewicht (9) bei Drehung der Spanneinrichtung dem Anlenkpunkt (9) des Expansionselements über den genannten Totpunkt zurückbewegt.

8. Spanneinrichtung nach Anspruch 1, **dadurch gekennzeichnet,** daß die Mitnehmerelemente Stangen (8) sind, die sich axial von dem Ende des Schwenkarmes weg erstrecken.

9. Spanneinrichtung nach Anspruch 8, **dadurch gekennzeichnet,** daß die Stangen (8) an ihren Enden Haken (17) aufweisen, die bei Anlage der Stangen (8) an dem Rad (2) dieses hintergreifen.

10. Spanneinrichtung nach Anspruch 9, **dadurch gekennzeichnet,** daß die Haken (17) oder die Stangen (8) axial verstellbar sind.

11. Spanneinrichtung nach Anspruch 10, **dadurch gekennzeichnet,** daß die Stangen (8) oder die Haken (17) durch Führungen (22, 23) gegen Drehung gesichert sind.

12. Spanneinrichtung nach Anspruch 2, **dadurch gekennzeichnet,** daß die Arme (5, 6) der Doppelhebel (4) mittels zweier Gelenkstangen (15, 16) zwangsgekoppelt sind, die parallel und in gleichem Abstand zur Drehachse des Aufspannzapfens 1 verlaufen.
